# EUROPÄISCHE PATENTSCHRIFT

(11) **EP 0 498 301 B1**
(45) Veröffentlichungstag und Bekanntmachung des Hinweises auf die Patenterteilung: **21.10.1998**
(21) Anmeldenummer: 92101537.6
(22) Anmeldetag: 30.01.1992
(51) Int. Cl.: C08G 12/12, C08G 14/08, C09J 161/24, C09J 161/34

(54) **Verfahren zur Herstellung eines wasserlöslichen (Form-)Aldehydharzes und dieses enthaltende Klebstoffzusammensetzung**
Process for preparing a watersoluble (form)aldehyde resin and adhesive composition containing the same
Procédé de préparation d'une résine (form)aldéhyde soluble dans l'eau et composition adhésive contenant cette résine

(30) Priorität: 07.02.1991 DE 4103752
(43) Veröffentlichungstag der Anmeldung: 12.08.1992
(73) Patentinhaber: H.B. Fuller Licensing & Financing, Inc., St. Paul, Minnesota 55110-5132 (US)
(72) Erfinder: Willging, Stephen, Dr., c/o H. B. Fuller Company, Vadnais Heights, Minnesota 55110 (US); Derecki, Gregor, Dr., c/o H. B. Fuller GmbH, W-3070 Nienburg (DE)
(74) Vertreter: Maiwald, Walter, Dr. Dipl.-Chem.

(56) Entgegenhaltungen:
- EP-A- 0 103 131
- EP-A- 0 152 318
- EP-A- 0 319 751
- EP-A- 0 341 537
- FR-A- 2 399 449
- CENTRAL PATENTS INDEX, BASIC ABSTRACTS JOURNAL Derwent Publications Ltd., London, GB; AN 78-24282A
- Book no. 547.7, 1988, 'ORGANIC POLYMER CHEMISTRY, SEITEN 322-325', K. J. SAUNDERS CHAPMAN AND HALL , LONDON

## Beschreibung

Die Erfindung betrifft ein Verfahren zur Verringerung des Gehalts an freiem Aldehyd in Klebstoffen für wasserfeste Papiererzeugnisse, die ein wasserlösliches Aldehydharz enthalten, welches durch Umsetzung eines Aldehyds mit wenigstens einem ersten copolymerisierbaren Monomer mit mindestens einem aciden Proton, in Abwesenheit von Glyoxal, erhalten wurde, durch Umsetzung des freien, nicht mit dem ersten Monomer umgesetzten Aldehyds mit wenigstens einem zweiten Monomer, welches ein acides Proton aufweist.

Die Erfindung betrifft weiterhin eine Klebstoffzusammensetzung zur Herstellung wasserfester Papiererzeugnisse wie Wellpappe und dergleichen, die Stärke, Aldehydharz und gegebenenfalls Additive in basischer wäßriger Lösung oder Suspension enthält.

Bei der Herstellung von Wellpappe werden seit Jahren Klebstoffe auf Stärkebasis verwendet. Die Wellpappe wird dabei mittels einer Klebebindung zwischen mindestens einem flachen Papierband und einem sinusförmig geformten welligen Band hergestellt.

Klebstoffe auf Stärkebasis enthalten grundsätzlich Stärke in löslicher oder suspendierter Form, Natriumhydroxid, Borax und andere Additive. Derartige Klebstoffe variieren in ihrer Zusammensetzung je nach Verwendungszweck. Es stellte sich heraus, daß als Klebstoffzusatz für die Herstellung von wasserfester Wellpappe eine Vielzahl von (Form-)Aldehydharzen nützlich ist. So beschreibt die US-PS 2 650 205 einen alkalischen Harz-Stärke-Klebstoff, der zur Herstellung von Wellpappe verwendet werden kann. In Verbindung mit Stärke werden dabei Keton-Aldehyd-Harze, Resorcin-Aldehyd-Harze, Phenol-Aldehyd-Harze und andere Harze genannt. Zahlreiche andere Patente beschreiben die in situ Herstellung von wasserfesten Wellpappeklebstoffen auf Stärkebasis. Beispielhaft seien hier die US 2 884 389, 2 886 541, 4 009 311 und 4 116 740 angeführt.

Ein großer Nachteil dieser wasserfesten Klebstoffe ist, daß die darin enthaltenen Harze meist freies Formaldehyd abgeben. Dabei kann während der Herstellung, der Lagerung und des Gebrauchs des Klebstoffes die Konzentration von überschüssigem, freiem Formaldehyd auf bis zu 0,3 Gewichtsprozent ansteigen. Da Formaldehyd stark flüchtig ist, wird es rasch in die Atmosphäre abgegeben, wodurch die Arbeitsbedingungen verschlechtert werden und Vergiftungserscheinungen auftreten können. Aus diesem Grund wurde eine Vielzahl von alternativen Systemen zur Reduzierung des freien Formaldehydgehaltes in Wellpappeklebstoffen entwickelt. Dabei wurde das Hauptaugenmerk auf formaldehydfreie Harze gerichtet, die jedoch zu verringerter Wasserfestigkeit des Klebstoffes führen. Des weiteren wurde versucht, wasserfeste Komponenten wie Wachse und andere hydrophobe Verbindungen für solche Klebstoffe zu verwenden.

Eine andere Lösung des Formaldehydproblems beschreibt die US-PS 4 366 275, derzufolge durch Verwendung einer Dihydroxyethylen-Harnstoff-Komponente der Gehalt an freiem Formaldehyd auf 0,1 bis 2 Gewichtsprozent reduziert werden kann. Nachteil des letztgenannten Verfahrens ist die große Schwankungsbreite der Konzentration des freien Formaldehyds.

Ein weiterer Nachteil der nach all diesen bekannten Herstellungsverfahren produzierten Formaldehydharzen liegt in ihrer langen Gelierzeit (> 50 Minuten), und entsprechend eingeschränkter Eignung zur Verbesserung der Wasserfestigkeit von zum Beispiel Wellpappe.

Aus K. J. Saunders, Organic Polymer Chemistry (1988), Seiten 322 bis 325 ist es bereits bekannt, ein Phenol mit einem molaren Überschuß von Formaldehyd zwischen 1 : 1,5 und 1 : 3 umzusetzen.

Aus FR-A-2 399 449 sind Harze für die Herstellung von Tafeln aus Holzmaterial bekannt, die thermisch gehärtet werden. Dabei wird ein Umsetzungsprodukt von Harnstoff und Formaldehyd zunächst mit Säure und Ammoniak behandelt, dann noch einmal mit Ammoniak und Harnstoff, und dann mit einer Acrylsäureverbindung umgesetzt. Anfänglich liegt das Formaldehyd, bezogen auf den Harnstoffgehalt, im Überschuß vor.

Aus EP-A-0 341 537 sind Imprägnierungsstoffe für Vliesbindemittel bekannt, die auf der Basis von Konzentrationsprodukten aus Harnstoff, Formaldehyd und Glyoxal formuliert sind und thermisch gehärtet werden. Gemäß diesem Stand der Technik wird ein dreistufiges Verfahren eingesetzt, bei dem zunächst Harnstoff mit einem großen Formaldehydüberschuß umgesetzt wird. Das Reaktionsprodukt wird dann mit Glyoxal umgesetzt, und das so erhaltene Zwischenprodukt wird dann noch einmal mit Harnstoff umgesetzt.

Aufgabe der vorliegenden Erfindung ist es, ein Verfahren zur Herstellung eines (Form-)Aldehydharzes und eine dieses enthaltende Klebstoffzusammensetzung der eingangs genannten Art zu schaffen, bei denen der Anteil von freiem (Form-)Aldehyd auf ein Minimum reduziert ist und keinen großen Schwankungsbreiten unterliegt und eine verringerte Gelierzeit mit entsprechend größerer Wasserfestigkeit des gebildeten (Form-) Aldehydharzes erreicht wird.

Die Aufgabe wird durch die Merkmale der unabhängigen Ansprüche gelöst.

Die Unteransprüche definieren vorteilhafte Ausgestaltungen der Erfindung.

Ein Vorteil des erfindungsgemäßen Verfahrens liegt in der auf einfache Weise erreichten starken Verringerung des Gehaltes an freiem Aldehyd in Harz, oft bis auf weniger als 0,1 Gew.-%.

Ein weiterer Vorteil des erfindungsgemäßen Verfahrens ist die Verminderung der Gelierzeit (< 50 Minuten) des Reaktionsgemisches bei entsprechend erhöhter Wasserfestigkeit.

Die Harze des erfindungsgemäßen Verfahrens umfassen solche, die durch die Reaktion eines Aldehyds, insbesondere Formaldehyds, mit einem Carbonyl-Monomeren, welches ein saures Proton an einem der Carbonyl-Gruppe benachbarten Kohlenstoffatom oder Stickstoffatom aufweist, gebildet werden. Typische Beispiele für solche Harze sind Keton-Formaldehydharze (vorzugsweise Aceton-Formaldehydharze), Resorcin-Formaldehydharze, Phenol-Formaldehydharze und Harnstoff-Formaldehydharze. (Im Rahmen dieser Beschreibung werden Verbindungen mit phenolischen OH-Gruppen wie Phenol, Resorcin und dergleichen vereinfachend ebenfalls als "Carbonylverbindungen" bezeichnet.) Derartige Harze werden in einer wäßrigen alkalischen Lösung durch Reaktion zwischen Formaldehyd und Comonomerem hergestellt. Formaldehyd kann dabei gasförmig oder in wäßriger Lösung oder in Form von Trioxymethylen (C₃H₆O₃), Hexamethylentetramin, Paraformaldehyd usw. vorliegen.

Die zur Herstellung der erfindungsgemäßen Harze verwendeten Comonomeren umfassen Ketone wie zum Beispiel Aceton, Methylethylketon, Phenylmethylketon, Diphenylketon, Cyclohexanon usw.; Phenole, wie zum Beispiel Phenol, Methylphenol, Aminophenol, usw.; Resorcin und substituierte Resorcine; Harnstoff und stickstoffsubstituierte Harnstoffe. Vorzugsweise wird ein Aceton-Formaldehydharz verwendet. Die nachstehenden Erläuterungen beziehen sich der Einfachheit wegen auf Formaldehyd, gelten aber entsprechend auch für höhere, in freier Form störende Aldehyde.

Diese Harze werden üblicherweise in einer wäßrigen Lösung, welche einen basischen Katalysator enthält, bei einer Reaktionstemperatur von mindestens 38°C hergestellt.

Die Reaktion verläuft exotherm. Das Molverhältnis Formaldehyd/Comonomer beträgt üblicherweise 1:1 bis 6:1, vorzugsweise 2:1 bis 5:1. Die typischen Reaktionsschemata zur Herstellung von Keton-Formaldehydharz, Harnstoff-Formaldehydharz, Phenol-Formaldehydharz, Resorcin-Formaldehydharz und anderen Formaldehydharzen sind aus dem Stand der Technik bekannt.

Nach der Reaktion zwischen Formaldehyd und dem entsprechenden Comonomeren ergibt sich ein Reaktionsgleichgewicht, bei dem freies Formaldehyd vorliegt. Dieses Reaktionsgemisch kann nun gemäß einem Aspekt der Erfindung mit einer Stickstoffbase und Harnstoff in Gegenwart eines aciden Katalysators, welcher vorzugsweise einen pKa-Wert größer als 2 besitzt, umgesetzt werden, um das freie Formaldehyd zu binden. Das Reaktionsgemisch kann jedoch auch gemäß einem anderen Aspekt der Erfindung mit einer oder mehreren zusätzlichen Carbonylkomponente(n), insbesondere einer Harnstoff-, Keton-, Resorcin- und/oder Phenolkomponente, unter alkalischen Bedingungen, d. h. ohne Säurekatalysator, umgesetzt werden. In beiden Fällen wird die Konzentration freien Aldehyds drastisch verringert und die Wasserfestigkeit des Produkts gesteigert.

Obige Reaktanden können dabei dem Reaktionsgemisch vor oder nach der Polymerisation des Formaldehyds und des Comonomers zugegeben werden, wobei allerdings die nachträgliche Zugabe bevorzugt wird.

Als nützliche Stickstoffkomponente erwiesen sich für den ersten Aspekt der Erfindung Verbindungen der allgemeinen Formel 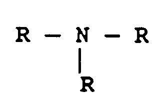 wobei R jeweils Wasserstoff, Alkyl, Hydroxylalkyl, Aryl, Alkaryl usw. sein kann, aber mindestens ein R Wasserstoff ist. Derartige Stickstoffbasen schließen Ammoniak, monosubstituierte Amine und disubstituierte Amine ein. Typische Beispiele für monosubstituierte Amine sind: Methylamin, Ethylamin, Propylamin, Hydroxyethylamin, tertiäres Butylamin, Ethylendiamin, cyclohexylamin, u.a.. Als Beispiele für disubstituierte Amine seien genannt: Dimethylamin, Diethylamin, Diethanolamin, Hydroxyethylpropylamin, Morpholin, Dicyclohexylamin u.a..

Harnstoff und Ammoniak sind bekannte Industriechemikalien. So kann Ammoniak in Form von Ammoniakgas oder Ammoniumhydroxyd bezogen werden. Harnstoff wird in fester Form oder in Form von wäßrigen Harnstofflösungen vertrieben. Vorzugsweise wird im vorliegenden Verfahren unsubstituierter Harnstoff verwendet, jedoch können monosubstituierte Harnstoffe verwendet werden, falls jedes Harnstoffmolekül mindestens einen freien Wasserstoff für die Reaktion besitzt, um damit freies Formaldehyd binden zu können.

Die erfindungsgemäß mit Hilfe eines Säurekatalysators ablaufende Formaldehydbindungsreaktion erfolgt vorzugsweise mit einem Säurekatalysator, welcher einen pKa-Wert von größer als 2 aufweist. Starke Säuren mit einem pKa-Wert kleiner als 1 sind oft nicht in der Lage, bei dieser Reaktion einen katalytischen Effekt zu erzeugen und behindern gleichzeitig die komplette Bindung des freien Formaldehyds. Daher werden Säuren mit einer mittleren Stärke und ihre Salze vorgezogen. Als Beispiele hierfür seien genannt: Essigsäure, Oxalsäure, Zitronensäure, Phosphorsäure, Kohlensäure und Salze wie zum Beispiel Ammoniumcarbonat, Ammoniumcitrat und andere.

Die Klebstoffe auf Stärkebasis nach vorliegender Erfindung können als Träger-Klebstoff, Nichtträger-Klebstoff oder Träger-/Nichtträger-Klebstoff definiert werden.

Dabei impliziert der Begriff "Träger-Klebstoff" die Gegenwart einer dünnen Basis aus gelatinisierter Stärke, in welcher ungelatinisierte oder nicht hydratisierte Stärkepartikel emulgiert oder suspendiert vorliegen. Der Begriff "NichtTräger-Klebstoff" impliziert die völlige Abwesenheit von gelatinisierter oder hydratisierter Stärke in der Klebstoffemulsion. Der Begriff "Träger-/Nichtträger-Klebstoff" bedeutet, daß man die Trennung zwischen gelatinisierter Stärke und ungelatinisierter Stärke in der Klebstoffzusammensetzung nicht klar vollziehen kann. Im allgemeinen werden "Träger-/Nichtträger-Klebstoffe" derartig hergestellt, daß ein nicht unbeträchtlicher Anteil von teilweise hydratisierter oder teilweise gelatinisierter Stärke gebildet wird. Erhebliche Stärkeanteile bleiben ungelatinisiert und unhydratisiert, wobei diese Anteile mit den Klebstoffkomponenten wechselwirken können.

Die sowohl in der Trägerphase als auch in der suspendierten Phase verwendete Stärke wird aus pflanzlichen Rohstoffen gewonnen. Die im Handel vertriebene Stärke wird als Perlstärke, pulverisierte Stärke, Stärke mit hohem Amyloseanteil, vorgekochte oder gelatinisierte Stärke geliefert. Vorzugsweise wird Perlstärke zur Herstellung der Trägerphase wie auch in der in dem Träger suspendierten Stärkephase verwendet.

Die erfindungsgemäße Klebstoffzusammensetzung enthält eine starke Base, welche die Bildung von vernetztem Harz fördert und zur Trocknung des Klebstoffes beiträgt. Grundsätzlich kann jede starke Base verwendet werden, wobei jedoch vorzugsweise Alkalimetallhydroxide wie etwa Natriumhydroxid und Kaliumhydroxid zum Einsatz kommen. Die starke Base erniedrigt gleichzeitig den Gelierpunkt der Stärke, wodurch die Hydratationsrate der Stärke während der Trocknung der Klebelinie ansteigt.

Die in der erfindungsgemäßen Klebstoffzusammensetzung verwendeten Harze schließen Harze mit ein, die während der Erwärmung in basischer Umgebung vernetzen und mit den Hydroxylgruppen der Stärkemoleküle vernetzend reagieren. Die Vernetzung verringert den hydrophilen Charakter und die Wasserlöslichkeit der Stärkemoleküle. Dies geschieht einerseits durch die Verringerung der für Wasser verfügbaren Hydroxylgruppen und andererseits durch die Einbringung von aliphatischen alkylenartigen Vernetzungsgruppen.

Die bevorzugte Gruppe von vernetzbaren Harzen besteht aus bekannten Kondensationsprodukten einer Keton- und einer Aldehydkomponente. Diese Harze sind als Polyketonpolyetherpolymere charakterisiert, wobei sie jedoch eine Vielzahl von anderen Monomeren, wie etwa Harnstoff, Melamin usw., enthalten können. In Gegenwart von Wärme und einer Base zersetzen sie sich für gewöhnlich und es entstehen Produkte, die mit den Stärkemolekülen vernetzen. Vorzugsweise werden Aceton-Formaldehydharze, Aceton-Harnstoff-Formaldehydharze, oder Aceton-Melamin-Formaldehydharze aus 15 bis 30 Gewichtsprozent Aceton, ca. 5 bis 50 Gewichtsprozent Formaldehyd und 0 bis 15 Gewichtsprozent des dritten Monomeren eingesetzt.

Die erfindungsgemäße Klebstoffzusammensetzung enthält vorzugsweise des weiteren eine Borsäurekomponente, welche mit der (gelatinisierten bzw. nicht gelatinisierten) Stärke während der Erwärmung und Trocknung zusammenwirkt. Dies geschieht durch die Reaktion der Borsäure-Komponente mit den verfügbaren Hydroxylgruppen der Stärke, wobei ein Stärke-Borax-Komplex gebildet wird, der die Gelierung der Träger-Stärkemoleküle und der suspendierten Stärkemoleküle unterstützt. Diese Reaktion erhöht die Haftkraft des Klebstoffes. Grundsätzlich kann jede Borsäure-Komponente, die eine freie Hydroxylgruppe an dem Boratom aufweist, verwendet werden. Als Beispiele seien hier die Borsäure (Orthoborsäure, H₃BO₃ und deren hydratisierte Formen H₃BO₃ x H₂O) und Borax (Natriumtetraborat-dekahydrat, Na₂B₄O₇ x 10H₂O) und andere hydratisierte und anhydridische Formen genannt. Die Borsäure-Komponente erhöht die Haftung, Viskosität und kohäsive Stärke des Klebstoffes. Des weiteren puffert Borax die ätzende Wirkung der verwendeten Base.

Als weiteres Reagens ist vorzugsweise in dem erfindungsgemäßen Reaktionsgemisch Polyvinylalkohol enthalten, da die Eigenschaften der Harze vom Molekulargewicht des Grundpolymers und dem Hydrolysegrad beeinflußt werden. Polyvinylalkohole werden normalerweise mit einem Molekulargewicht von 20.000 bis 100.000 hergestellt und lassen sich leicht vernetzen und boratisieren, wodurch Gelbildung eingeleitet wird. Bekanntermaßen besteht Polyvinylalkohol aus einem Polyhydroxypolymer, bestehend aus Polymethylenketten mit Hydroxylgruppen, hergestellt durch die Hydrolyse von Polyvinylacetat. Das theoretische Monomer 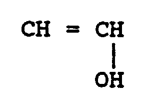 existiert nicht. Polyvinylalkohol ist eines der wenigen käuflichen wasserlöslichen Polymeren mit einem hohen Molekulargewicht.

Eine bevorzugte lösliche Polyvinylalkoholzusammensetzung für den Einsatz im erfindungsgemäßen Verfahren ist Polyvinylalkohol, welcher aus einem Homopolymer oder Interpolymer von Vinylacetat, welches teilweise (zu weniger als 91%) hydrolysiert ist, besteht. Der bevorzugt verwendete, teilweise hydrolysierte Polyvinylalkohol ist mit unterschiedlichen Molekulargewichten erhältlich, wobei diese durch die Brookfield-Viskosität einer 4 Gew.-% wäßrigen Lösung bei 20°C gekennzeichnet sind. Die Polyvinylalkohole mit geringem Molekulargewicht haben eine Viskosität von 4 bis 10 cP, die mit mittlerem Molekulargewicht eine Viskosität von 15 bis 30 cP und die mit hohem Molekulargewicht eine Viskosität von 35 bis 60 cP. Die Teilchengröße wird derart gewählt, daß mindestens 99 % des Polyvinylalkohols durch ein 80-mesh-Sieb fallen.

Erfindungsgemäß bevorzugt sind jedoch auch im wesentlichen vollverseifte Polyvinylalkohollösungen einsetzbar.

Besonders bevorzugte Wachse für den Einsatz in erfindungsgemäßen wasserfesten Wellpappeklebern sind folgende: Rohölwachse (zum Beispiel mikrokristalline Wachse, Kalkwachse, Paraffinwachse), Kandelillawachse, Bienenwachse u.a..

Das erfindungsgemäß bevorzugte vernetzbare Formaldehydharz wird durch Reaktion von Formaldehyd und einem Monomeren, welches eine Carbonylgruppe und einen sauren Wasserstoff an einem benachbarten Atom, zum Beispiel einem Stickstoff- oder Kohlenstoffatom, aufweist, gebildet. Die Herstellung des Harzes umfaßt typischerweise eine erste Reaktion zwischen dem Monomer und dem Formaldehyd, wobei das Molverhältnis Monomer/Formaldehyd 1:1 bis 1:6, bevorzugterweise 1:3 bis 1:5 beträgt und die Reaktion unter alkalischen Bedingungen bei einer Temperatur von 20°C bis 100°C, vorzugsweise 30°C bis 80°C, aufläuft. Als alkalische Katalysatoren werden starke organische und anorganische Basen verwendet. Bevorzugte Katalysatoren sind anorganische Basen auf Alkalimetallbasis, wie zum Beispiel Natriumhydroxyd, Kaliumhydroxyd, Calciumhydroxyd, Magnesiumhydroxyd u.a. Des weiteren können auch Salze der starken Basen verwendet werden, wie etwa Natriumkarbonat, Kaliumkarbonat, Trinatriumphosphat, Trikaliumphosphat u.a.. Die Reaktion wird normalerweise unter atmosphärischen Bedingungen durchgeführt, kann aber ebenso in einer inerten Atmosphäre, wie etwa einer Stickstoff-, Kohlendioxyd-, oder Argon-Atmosphäre durchgeführt werden.

Alkalinität und Reaktionstemperatur müssen während der Reaktion kontrolliert werden. Es entsteht ein unlösliches, sehr stark vernetztes Reaktionsprodukt. Typischerweise wird der pH-Wert der Reaktionsmischung größer als 7 gehalten, wobei am Ende der Reaktion der pH-Wert der Mischung zwischen 7 und 8 liegt. Die Reaktionszeiten sind hauptsächlich von der Temperatur, der Alkalinität und dem gewünschten Feststoffgehalt des Produktes abhängig. Das Produkt enthält normalerweise 50 bis 60 Gewichtsprozent Feststoffe, 30 % bis 50 % Formaldehyd und 10 % bis 25 % des zweiten Monomers (letztere Prozentangaben beziehen sich auf 100 % Feststoffgehalt).

Zur Herstellung eines Aceton-Formaldehydharzes wird ein Reaktor, welcher einen Kondensator aufweist, mit Wasser, Aceton und Formaldehyd gefüllt, wobei das Molverhältnis zwischen Aceton und Formaldehyd ungefähr 1:4 beträgt. Nachdem Aceton, Formaldehyd und Wasser vollständig gemischt sind, wird durch die Zugabe einer Base eine exotherme Reaktion initiiert, welche die Kontrolle der Zugabe des alkalischen Initiators erforderlich macht, um die Temperatur nicht höher als ca. 65°C werden zu lassen. Nachdem die Reaktion vollständig abgelaufen ist, kann das Reaktionsprodukt auf freies Formaldehyd analysiert werden.

Im folgenden wird die erfindungsgemäße Herstellung eines wasserlöslichen Formaldehydharzes unter Zugabe von Harnstoff, einer Stickstoffbase und eines Säurekatalysators näher beschrieben.

Der pH-Wert des Reaktionsgemisches wird durch Zusatz eines Säurekatalysators erniedrigt. Die Reaktionstemperatur wird oberhalb 20°C, üblicherweise zwischen 30°C und 50°C gehalten. Die Reaktion kann solange ablaufen, bis der Gehalt an freiem Formaldehyd in dem Reaktionsgemisch unter 3 % reduziert ist, wobei der Gehalt an freiem Formaldehyd oft sehr schnell auf 0,5 % bis 2 % abfällt. Wie die folgenden Daten zeigen werden, kann die Formaldehydkonzentration mit der Zeit variieren, auch nachdem die vollständige Reaktion abgelaufen ist. Oft fällt die Formaldehydkonzentration nach einer gewissen Standzeit auf weniger 0,1 %.

Tabelle 1 zeigt vorteilhafte Reaktandenmengen zur Bindung von freiem Formaldehyd:

**Tabelle 1**

| Gehalt an Komponenten (in Gew.-% des Ausgangs-Reaktionsprodukts) | | | |
|---|---|---|---|
| | nützlich | bevorzugt | meist bevorzugt |
| Stickstoffkomponente | 0,01-15 | 0,1-10 | 0,5-8 |
| Harnstoff | 0,1-10 | 0,25-8 | 0,5-5 |
| Säure | 0,01-5 | 0,05-2 | 0,1-0,5 |

Die folgenden Beispiele illustrieren diesen Aspekt des erfindungsgemäßen Verfahrens.

### Beispiel I

Eine Serie von verschiedenen Harzpräparationen (1 bis 23 in Tabelle 3) wurde hergestellt. Dazu gab man in kleine Glasbecher je 100g eines wäßrigen (56 Gew.-%) Aceton-Formaldehydharzes, sowie verschiedene Gehalte an Harnstoff, 26%-igem wäßrigen Ammoniak und Zitronensäure (siehe Tabelle 3). Das Reaktionsgemisch wurde erhitzt und mit einem Stab eine bestimmte Zeit lang gerührt. Der Formaldehydgehalt wurde ermittelt nachdem die Reaktion im Gleichgewicht war, 24 Stunden nach Einstellung des Gleichgewichtes und eine Woche später. Der Gehalt an freiem Formaldehyd kann der Tabelle 3 entnommen werden. Besonders bemerkenswert ist, daß unter bestimmten Bedingungen der Gehalt an freiem Formaldehyd eine Woche nach der Reaktion unter 0,1% liegt. Der Tabelle 3 ist ebenfalls zu entnehmen, daß beim Weglassen eines der Zusatzstoffe, wie der Säure, dem Ammoniak oder dem Harnstoff, die Gehalte an freiem Formaldehyd um mindestens das Doppelte ansteigen.

### Beispiel II

Der Versuch gemäß Beispiel I wurde mit folgenden Komponenten wiederholt: 100g Aceton-Formaldehydharz Michemrez 400 (Wz), 3,0g 26%-iges wäßriges Ammoniak, 0,5g Zitronensäure; 30 Minuten erhitzt und gerührt bei 50°C, mit anschließender Zugabe von 5g Harnstoff. Der Gehalt an freiem Formaldehyd betrug:

| vor Behandlung | anfänglich | 24 Stunden | 1 Woche |
|---|---|---|---|
| 1,3 % | 0,17 % | 0,08 % | 0,08 % |

### Beispiel III

Beispiel II wurde wiederholt mit Aceton-Formaldehydharz Bordon WS-189-84 (Wz). Die Konzentration an freiem Formaldehyd betrug:

| vor Behandlung | anfänglich | 24 Stunden | 1 Woche |
|---|---|---|---|
| 1,55 % | 0,18 % | 0,10 % | 0,05 % |

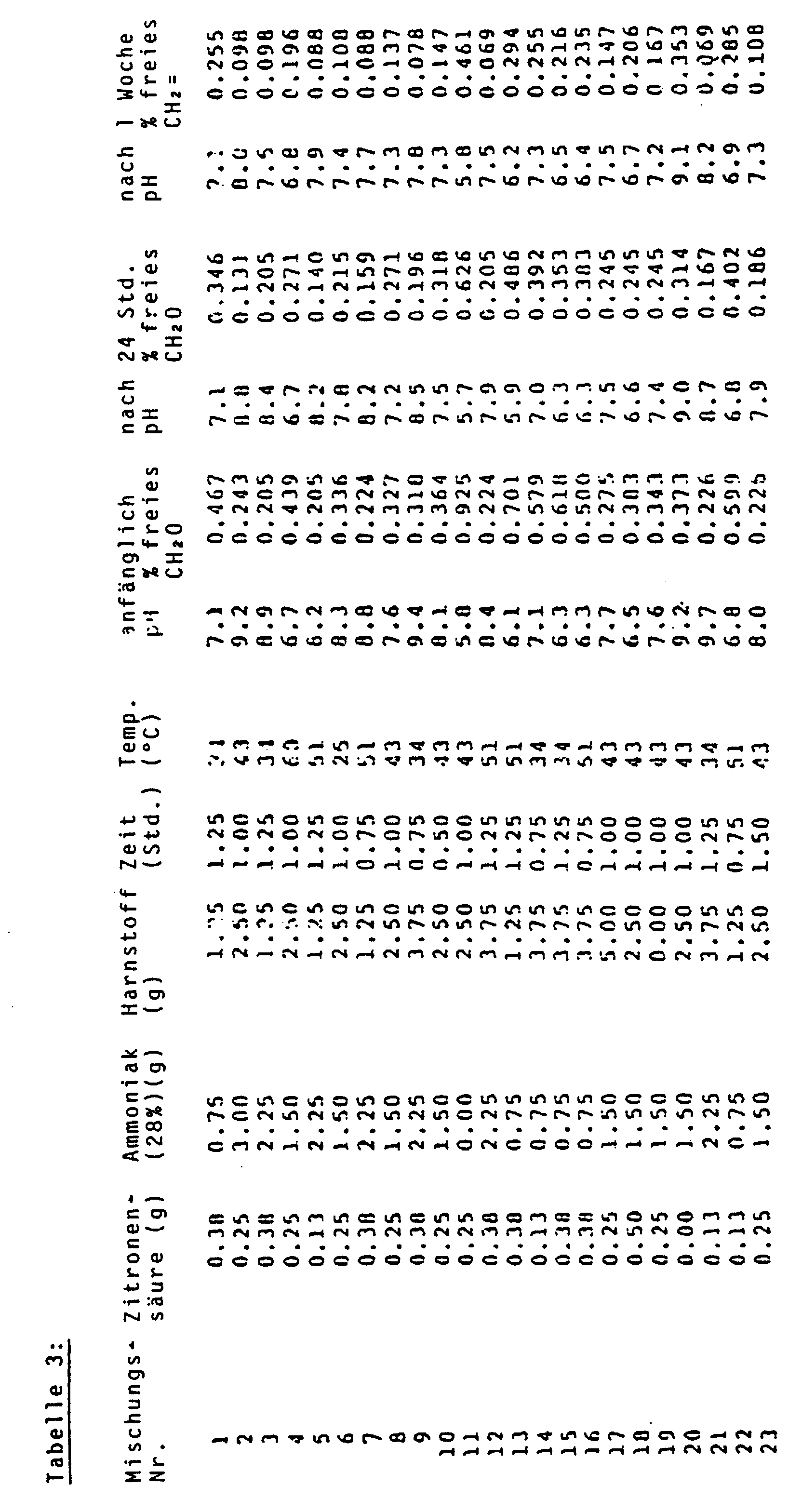

### Beispiel IV

Beispiel I, Mischung Nr. 18 (siehe Tabelle 3) wurde mit 3,0g Monoethanolamin, welches den wäßrigen Ammoniak ersetzt, und 5,0g Harnstoff (statt 2,5g Harnstoff) wiederholt. Die Konzentration an freiem Formaldehyd betrug:

| vor Behandlung | anfänglich | 24 Stunden | 1 Woche |
|---|---|---|---|
| 1,2 % | 0,22 % | 0,09 % | 0,15 % |

### Beispiel V

Beispiel IV wurde wiederholt, wobei jedoch nunmehr 5g Diethanolamin zugegeben wurden. Die Konzentration an freiem Formaldehyd betrug:

| vor Behandlung | anfänglich | 24 Stunden | 1 Woche |
|---|---|---|---|
| 1,2 % | 0,67 % | 0,3 % | 0,65 % |

### Beispiel VI

In ein kleines Glasgefäß wurden 75g eines wäßrigen Aceton-Formaldehydharzes gegeben, welches durch die basisch katalysierte Kondensationsreaktion von 4 Mol Formaldehyd mit einem Mol Aceton hergestellt wurde und 1,15 Gew.-% freies Formaldehyd enthielt. Zu diesem wäßrigen Harz wurden nun 1,88g wäßrige (26 Gew.-%) Ammoniaklösung und 0,23g Eisessig gegeben. Das Reaktionsgemisch wurde 30 Minuten lang auf 50°C erhitzt. Anschließend wurden 3,75g Harnstoff zugesetzt. Nachdem sich der Harnstoff in der Mischung gelöst hatte, wurde auf Raumtemperatur abgekühlt und die Konzentration an freiem Formaldehyd mittels Sulfittitration bestimmt:

| anfänglich | 24 Stunden | 48 Stunden | 6 Tage |
|---|---|---|---|
| 0,18 % | 0,22 % | 0,19 % | 0,10 % |

### Beispiel VII

Das Beispiel VI wurde wiederholt, jedoch mit 1,88g wäßriger (26 Gew.-%) Ammoniaklösung und 0,53g Ammoniumsulfat (statt 0,23g Eisessig). Die Konzentration an freiem Formaldehyd betrug:

| anfänglich | 24 Stunden | 48 Stunden | 6 Tage |
|---|---|---|---|
| 0,10 % | 0,16 % | 0,15 % | 0,13 % |

### Beispiel VIII

50g eines wäßrigen Aceton-Formaldehydharzes mit 2,0 Gew.-% freiem Formaldehyd wurden in einen kleinen Glasbecher gegeben. Anschließend gab man unter Rühren 0,9g Ammoniumcarbonat und 2,5g Harnstoff hinzu. Nachdem Gasentwicklung einsetzte, erhitzte man das Reaktionsgemisch für eine Stunde in einem Wasserbad bei 55°C. Dabei trat weitere Gasentwicklung auf. Nach Abkühlung auf Raumtemperatur betrug die Konzentration an freiem Formaldehyd 0,15 Gewichtsprozent. Nach einer Standzeit von 3 Tagen fiel diese Konzentration auf 0,08%.

### Beispiel IX

Zu 348g eines wässrigen Aceton-Formaldehydharzes mit 1,3 Gew.-% freiem Formaldehyd gab man 7,5g Diammoniumphosphat. Das Gemisch wurde 3 Stunden lang bei Raumtemperatur gerührt. Nach 3 Stunden war der Gehalt an freiem Formaldehyd auf 0,32 % gefallen. Man ließ das Reaktionsgemisch über Nacht stehen und gab anschließend zu 300g dieses Gemisches 30g Harnstoff. Nach einer weiteren Standzeit von 2 Stunden beim Raumtemperatur betrug der Gehalt an freiem Formaldehyd 0,19 Gew.-%.

Im folgenden wird anhand von Beispielen der zweite Aspekt des erfindungsgemäßen Verfahrens beschrieben, demgemäß die Bindung freien Aldehyds durch Umsetzung mit einer oder mehreren zusätzlichen Carbonylkomponenten, insbesondere Harnstoff-, Keton-, Resorcin- und/oder Phenolkomponenten, ohne Säurekatalysator erfolgt.

### Beispiel X

10,0 Gewichtsteile wasserlösliches Aceton-Formaldehydharz (Molverhältnis Formaldehyd:Aceton = 3:1) wurden mit 2,0 Gewichtsteilen Resorcin 10 Minuten bei Raumtemperatur gerührt, bis das Resorcin vollständig gelöst war. Der pH-Wert betrug 9,0. Die Mischung erhitzte man auf 50°C und kondensierte bei dieser Temperatur 30 Minuten, bis die Viskosität 300 mPa nach Brookfield (RVT, Spindel 1, 20 Upm, 25°C) betrug. Dann wurde das Harz auf 20°C abgekühlt. Der Gehalt an freiem Formaldehyd war mit 0,1% besonders niedrig.

### Beispiel XI

10,0 Gewichtsteile wasserlösliches Aceton-Formaldehydharz (Molverhältnis Formaldehyd:Aceton = 4:1) wurden zunächst mit 0,5 Gewichtsteilen Harnstoff modifiziert. Das modifizierte Harz wurde dann mit 0,1 Gewichtsteilen Resorcin bei Raumtemperatur unter ständigem Rühren kondensiert. Der pH-Wert der Mischung betrug 9,0. Die alkalische Polykondensation wurde nach 15 Minuten durch Zugabe von 0,01 Gewichtsteilen Essigsäure (96 %) unterbrochen. Dem Aceton-Formaldehyd-Harnstoff-Resorcin-Polykondensat wurden 3,0 Gewichtsteile einer vorverkleisterten, kaltwasserlöslichen Stärke zugesetzt. Nach 20 Minuten Rühren betrug die Viskosität 1000 mPa (Brookfield RVT, Spindel 2, 20 Upm, 20°C). Die Lagerstabilität des Harzes war besonders gut. Bei Lagerung über eine Woche bei 50°C fand keine Sedimentation statt. Der Gehalt an freiem Formaldehyd betrug 0,1 %.

### Beispiel XII

10 Gewichtsteile wasserlösliches Methylethylketon-Formaldehydharz (Molverhältnis Formaldehyd:Keton = 5:1) wurde mit 0,5 Gewichtsteilen Resorcin bei 50°C kondensiert. Nach 30 Minuten wurden die Reaktionsprodukte auf 200C abgekühlt. Unter intensivem Rühren wurden 0,5 Gewichtsteile eines vorverkleisteren Stärkeäthers zugegeben. Die Viskosität der Mischung stieg auf 1200 mPa an (Brookfield RVt, Spindel 2, 20 Upm, 20°C). Der Gehalt an freiem Formaldehyd betrug 0,1 %.

### Beispiel XIII

Die in den Beispielen X bis XII beschriebenen Produkte wurden hinsichtlich ihrer Gelierzeit verglichen (Bestimmung der Härtungszeit wäßriger Harnstoff- und Melaminharzlösungen bei 100°C, modifizierte Methode von Hoechst). Die Bestimmung wurde bei drei verschiedenen pH-Werten durchgeführt, weil die Reaktivität der Polykonsationsharze sehr stark pH-abhängig ist.

**Tabelle 10**

| | Gelierzeit (min) | | |
|---|---|---|---|
| Harz (Einwaage 30g) | pH 7-8 | pH 10 | pH11 |
| nach Beispiel I | 15 | 10 | 5 |
| nach Beispiel II | 30 | 20 | 15 |
| nach Beispiel III | 15 | 12 | 8 |
| unmodifiziertes Aceton-Formaldehyd-Harz | geliert nicht | > 60 | 50 |

Aus Tabelle 10 ist zu erkennen, daß die Gelierzeiten der nach den Beispielen X, XI und XII hergestellten, erfindungsgemäßen Formaldehydharze im Vergleich zu einem unmodifizierten Aceton-Formaldehydharz drastisch verkürzt sind. Dies bedeutet eine deutliche Verbesserung der Wasserfestigkeit von zum Beispiel Wellpappen, die mit den erfindungsgemäßen Formaldehydharzen behandelt werden.

Obwohl das Harz gemäß dieser Erfindung für eine Vielzahl von Klebstoffen auf Naturproduktbasis verwendet werden kann, wird es gewöhnlich für Wellpappeklebstoffe auf Stärkebasis benutzt. Hierzu wird ein Stärkeschlamm mit einer Alkalimetallbase in Wasser erwärmt, um die Stärke zumindest teilweise zu gelatinisieren. Ist die Stärke im gewünschten Umfang gelatinisiert, können die übrigen Komponenten, wie etwa Borax, Wachs, Polyvinylalkohol und Aldehydharz, zugegeben werden. Die bevorzugten Anteile an einzelnen Komponenten können der Tabelle 2 entnommen werden.

**Tabelle 2**

| Komponente | nützlich | bevorzugt | meist bevorzugt |
|---|---|---|---|
| Stärke | 5-50 | 10-50 | 12-50 |
| Alkalimetallbase | 0,1-10 | 0,2-5 | 0,5-3 |
| Borax | 0,1-5 | 0,2-4 | 0,3-3 |
| Polyvinylalkohol | 0-5 | 0,1-4 | 0,2-3 |
| Harz | 0,1-5 | 0,1-4 | 0,2-3 |
| Wachsemulsion | 0-5 | 0,1-4 | 0,2-3 |

Die Beispiele zeigen deutlich auf, daß durch die Erfindung die Konzentration an freiem Formaldehyd im Formaldehydharz auf weniger als 0,1 Gewichtsprozent (bezogen auf die wäßrige Harzverbindung) reduziert werden kann.

## Patentansprüche

1. Verfahren zur Verringerung des Gehaltes an freiem Aldehyd in Klebstoffen für wasserfeste Papiererzeugnisse, die ein wasserlösliches Aldehydharz enthalten, welches durch Umsetzung eines Aldehyds mit wenigstens einem ersten copolymerisierbaren Monomer mit mindestens einem aciden Proton, in Abwesenheit von Glyoxal, erhalten wurde, durch Umsetzung des freien, nicht mit dem ersten Monomer umgesetzten Aldehyds mit wenigstens einem zweiten Monomer, welches ein acides Proton aufweist,
**dadurch gekennzeichnet,** daß das zweite Monomer Harnstoff oder unsubstituierten, wenigstens ein reaktives Proton aufweisenden Harnstoff in Gegenwart von, oder bereits umgesetzt mit, einer Stickstoffbase mit wenigstens einer NH-Gruppe und in Gegenwart eines sauren Katalysators ist, oder das zweite Monomer das acide Proton an einem, einer Carbonyl-Gruppe benachbarten Kohlenstoffatom oder in Form einer phenolischen Hydroxylgruppe aufweist.

2. Verfahren nach Anspruch 1,
**dadurch gekennzeichnet,** daß der Aldehyd Formaldehyd in Form von gasförmigem oder in Wasser gelöstem HCHO oder als Trioxymethylen, Hexamethylentetramin oder Paraformaldehyd ist.

3. Verfahren nach Anspruch 1 oder 2,
**dadurch gekennzeichnet,** daß das erste Monomer ist:
a) Aceton, Methylethylketon, Phenylethylketon, Diphenylketon oder Cyclohexanon;
b) unsubstituiertes Phenol, Methylphenol oder Aminophenol;
c) Resorcin oder substituiertes Resorcin, oder
d) Harnstoff oder stickstoffsubstituierter Harnstoff.

4. Verfahren nach einem der Ansprüche 1 bis 3,
**dadurch gekennzeichnet,** daß das zweite Monomer Harnstoff in Gegenwart einer Stickstoffbase der allgemeinen Formel 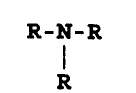 und eines sauren Katalysators ist, wobei in der Formel jeder Rest R unabhängig Wasserstoff, Alkyl, Hydroxyalkyl, Aryl, Alkaryl oder Aralkyl sein kann, mindestens ein Rest R jedoch Wasserstoff ist.

5. Verfahren nach Anspruch 4,
**dadurch gekennzeichnet,** daß die Stickstoffbase Ammoniak, Methylamin, Ethylamin, Propylamin, e-Butylamin, Hydroxyethylamin, Ethylendiamin, Cyclohexylamin, Dimethylamin, Diethanolamin, Hydroxyethylpropylamin, Morpholin oder Dicyclohexylamin ist.

6. Verfahren nach Anspruch 4 oder 5,
**dadurch gekennzeichnet,** daß der saure Katalysator einen pKa-Wert von wenigstens 2 aufweist.

7. Verfahren nach Anspruch 6,
**dadurch gekennzeichnet,** daß der saure Katalysator eine Säure mittlerer Säurestärke und/oder ein Salz einer solchen Säure umfaßt.

8. Verfahren nach Anspruch 7,
**dadurch gekennzeichnet,** daß der saure Katalysator Essigsäure, Oxalsäure, Zitronensäure, Phosphorsäure oder Kohlensäure umfaßt.

9. Verfahren nach einem der Ansprüche 4 bis 8,
**dadurch gekennzeichnet,** daß die Stickstoffbase mit unsubstituiertem Harnstoff umgesetzt wird.

10. Verfahren nach einem der Ansprüche 4 bis 8,
**dadurch gekennzeichnet,** daß, bezogen auf das erste Reaktionsgemisch, eingesetzt werden:
a) 0,01 bis 15,0 Gewichtsprozent der Stickstoffbase
b) 0,1 bis 10 Gewichtsprozent Harnstoff und
c) 0,01 bis 5,0 Gewichtsprozent des sauren Katalysators

11. Verfahren nach Anspruch 10,
**dadurch gekennzeichnet,** daß eingesetzt werden:
a) 0,1 bis 10 Gewichtsprozent der Stickstoffbase
b) 0,25 bis 8 Gewichtsprozent Harnstoff und
c) 0,05 bis 2 Gewichtsprozent des sauren Katalysators

12. Verfahren nach Anspruch 11,
**dadurch gekennzeichnet,** daß eingesetzt werden:
a) 0,5 bis 8 Gewichtsprozent der Stickstoffbase
b) 0,5 bis 5 Gewichtsprozent Harnstoff und
c) 0,1 bis 0,5 Gewichtsprozent des sauren Katalysators

13. Verfahren nach einem der Ansprüche 1 bis 3,
**dadurch gekennzeichnet**, daß das zweite Monomere Aceton, unsubstituiertes Phenol oder Resorcin ist.

14. Verfahren nach Anspruch 13,
**dadurch gekennzeichnet,** daß wenigstens zwei verschiedene zweite Monomere gleichzeitig oder nacheinander verwendet werden.

15. Verfahren nach einem der Ansprüche 13 oder 14,
**dadurch gekennzeichnet,** daß das bzw. die zweite(n) Monomere(n) in einer Menge von 0,1 bis 50,0 Gewichtsprozent, bezogen auf das Umsetzungsprodukt aus Aldehyd und erstem Monomer, eingesetzt wird bzw. werden.

16. Verfahren nach Anspruch 15,
**dadurch gekennzeichnet,** daß das bzw. die zweite(n) Monomere(n) in einer Menge von 1,0 bis 20,0 Gewichtsprozent eingesetzt wird bzw. werden.

17. Verfahren nach einem der Ansprüche 13 bis 16,
**dadurch gekennzeichnet,** daß das Umsetzungsprodukt aus Aldehyd und erstem Monomer vor der Umsetzung mit dem zweiten Monomer mit Harnstoff oder Melamin modifiziert wird.

18. Verfahren nach Anspruch 17,
**dadurch gekennzeichnet,** daß die Modifizierung mit 1,0 bis 10,0 Gewichtsprozent Harnstoff, bezogen auf das Umsetzungsprodukt, erfolgt.

19. Verfahren nach Anspruch 18,
**dadurch gekennzeichnet,** daß die Modifizierung mit ungefähr 5,0 Gewichtsprozent Harnstoff erfolgt.

20. Verfahren nach einem der vorstehenden Ansprüche,
**dadurch gekennzeichnet,** daß die Umsetzungen in wäßriger Phase bei einem pH-Wert zwischen 4 und 10 erfolgen.

21. Verfahren nach Anspruch 20,
**dadurch gekennzeichnet,** daß die Umsetzungen im alkalischen Bereich bis pH 10 erfolgen.

22. Klebstoffzusammensetzung zur Herstellung wasserfester Papiererzeugnisse wie Wellpappe und dergleichen, die Stärke, Aldehydharz und gegebenenfalls Additive in basischer wäßriger Lösung oder Suspension enthält,
**gekennzeichnet durch** einen Gehalt an freiem Aldehyd von weniger als 3 %, erhältlich gemäß einem der Ansprüche 1 bis 21.

23. Klebstoffzusammensetzung nach Anspruch 22, weiterhin enthaltend eine Borsäure-Komponente.

24. Klebstoffzusammensetzung nach Anspruch 23, enthaltend Orthoborsäure und/oder Borax.

25. Klebstoffzusammensetzung nach einem der Ansprüche 22 bis 24, weiterhin enthaltend eine Polyvinylalkohol-Komponente.

26. Klebstoffzusammensetzung nach Anspruch 25, enthaltend ein vollständig oder teilweise hydrolysiertes Vinylacetat-Homo- oder -Interpolymer, bei dem weniger als 91 % der Hydroxylgruppen unverestert sind.

27. Klebstoffzusammensetzung nach einem der Ansprüche 22 bis 26, mit einen Gehalt an einem Wachs.

28. Klebstoffzusammensetzung nach Anspruch 27, mit einem Gehalt an Rohölwachs, Kandelillawachs oder Bienenwachs.

29. Klebstoffzusanmensetzung nach einem der Ansprüche 22 bis 28, enthaltend (in Gewichtsteilen) die folgenden Bestandteile:
| **Bestandteil** | **Bereich** |
|---|---|
| Stärke | 5-50 |
| Alkalimetall-base | 0,1-10,0 |
| Borax | 0,1-5,0 |
| Polyvinylalkohol | 0-5,0 |
| Aldehydharz | 0,1-5,0 |
| Wachs | 0-5,0 |

30. Klebstoffzusanmensetzung nach Anspruch 29, enthaltend (in Gewichtsteilen) die folgenden Bestandteile:
| **Bestandteil** | **Bereich** |
|---|---|
| Stärke | 10-50 |
| Alkalimetall-base | 0,2-5,0 |
| Borax | 0,2-4,0 |
| Polyvinylalkohol | 0,1-4,0 |
| Aldehydharz | 0,1-4,0 |
| Wachs | 0,1-4,0 |

31. Klebstoffzusammensetzung nach Anspruch 29, enthaltend (in Gewichtsteilen) die folgenden Bestandteile:
| **Bestandteil** | **Bereich** |
|---|---|
| Stärke | 12-50 |
| Alkalimetall-base | 0,5-3,0 |
| Borax | 0,3-3,0 |
| Polyvinylalkohol | 0,2-3,0 |
| Aldehydharz | 0,2-3,0 |
| Wachs | 0,2-3,0 |

## Claims

1. A process for reducing the content of free aldehyde in adhesives for waterproof paper products, containing a water-soluble aldehyde resin, obtained by reacting an aldehyde with at least a first copolymerizable monomer with at least one acid proton in the absence of glyoxal, by reacting the free aldehyde, which has not reacted with the first monomer, with at least a second monomer, having an acid proton,
**characterized in that** the second monomer is urea or substituted urea, containing at least one reactive proton in the presence of, or already reacted with, a nitrogen base containing at least one NH-group in the presence of an acid catalyst, or that the second monomer has the acidic proton attached to a carbon atom, adjacent to a carbonyl group or in the form of a phenolic hydroxyl group.

2. Process according to claim 1,
**characterized in that** the aldehyde is formaldehyde in the form of gaseous HCHO or HCHO dissolved in water or trioxymethylene, hexamethylene tetraamine or paraformaldehyde.

3. Process according to claim 1 or claim 2,
**characterized in that** the first monomer is:
a) acetone, methylethyl ketone, phenylethyl ketone, diphenyl ketone or cyclohexanone;
b) non-substituted phenol, methyl phenol or amino phenol;
c) resorcinol or substituted resorcinol, or
d) urea or nitrogen-substituted urea.

4. Process according to one of claims 1 to 3,
**characterized in that** the second monomer is urea in the presence of a nitrogen base of the general formula 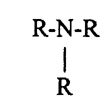 and of an acid catalyst, wherein in the formula each residue R may be independently hydrogen, alkyl, hydroxyalkyl, aryl, alkaryl or aralkyl, wherein at least one residue R is hydrogen.

5. Process according to claim 4,
**characterized in that** the nitrogen base is ammonia, methylamine, ethylamine, propylamine, e-butylamine, hydroxyethylamine, ethylene diamine, cyclohexyl amine, dimethylamine, diethanolamine, hdroxyethylpropylamine, morpholine or dicyclohexylamine.

6. Process according to claim 4 or claim 5,
**characterized in that** the acid catalyst has a pKa of at least 2.

7. Process according to claim 6,
**characterized in that** the acid catalyst comprises an acid of moderate strength and/or a salt of such acid.

8. Process according to claim 7,
**characterized in that** the acid catalyst comprises acetic acid, oxalic acid, citric acid, phosphoric acid or carbonic acid.

9. Process according to one of claims 4 to 8,
**characterized in that** the nitrogen base is reacted with non-substituted urea.

10. Process according to one of claims 4 to 8,
**characterized by** use of the following components, based on the first reaction mixture:
a) 0.01 to 15.0 weight percent of the nitrogen base
b) 0.1 to 10 weight percent of urea and
c) 0.01 to 5.0 weight percent of the acid catalyst.

11. Process according to claim 10,
**characterized by** use of:
a) 0.1 to 10 weight percent of the nitrogen base
b) 0.25 to 8 weight percent of urea and
c) 0.05 to 2 weight percent of the acid catalyst.

12. Process according to claim 11,
**characterized by** the use of:
a) 0.5 to 8 weight percent of the nitrogen base
b) 0.5 to 5 weight percent of urea and
c) 0.1 to 0.5 weight percent of the acid catalyst.

13. Process according to one of claims 1 to 3,
**characterized in that** the second monomer is acetone, non-substituted phonol or resorcinol.

14. Process according to claim 13,
**characterized in that** at least two different second monomers are used simultaneously or in succession.

15. Process according to one of claims 13 or 14,
**characterized in that** the second monomer(s) is/are used in an amount of 0.1 to 50.0 weight percent, based on the product resulting from the reaction of the aldehyde with the first monomer.

16. Process according to claim 15,
**characterized in that** the second monomer(s) is/are used in an amount of 1.0 to 20.0 weight percent.

17. Process according to one of claims 13 to 16,
**characterized in that** the product resulting from the reaction of the aldehyde with the first monomer is modified with urea or melamine prior to the reaction with the second monomer.

18. Process according to claim 17,
**characterized in that** the modifying reaction occurs with 1.0 to 10.0 weight percent of urea, based on the reaction product.

19. Process according to claim 18,
**characterized in that** the modifying reaction occurs with about 5.0 weight percent of urea.

20. Process according to one of the preceding claims,
**characterized in that** the reactions occur in aqueous phase at a pH between 4 and 10.

21. Process according to claim 20,
**characterized in that** the reactions occur in the alkaline range up to a pH of 10.

22. An adhesive composition for the preparation of waterproof paper products, such as corrugated board or the like, containing starch, aldehyde resin and, optionally, additives in basic aqueous solution or suspension,
**characterized by** a content of free aldehyde of less than 3%, obtainable according one of claims 1 to 12.

23. Adhesive composition according to claim 22, further containing a boric acid compound.

24. Adhesive composition according to claim 23, containing orthoboric acid and/or borax.

25. Adhesive composition according to one of claims 22 to 24, further containing a polyvinyl alcohol compound.

26. Adhesive composition according to claim 25, containing a fully or partly hydrolyzed vinyl acetate homo- or interpolymer, wherein less than 91% of the hydroxyl groups are unesterified.

27. Adhesive composition according to one of claims 22 to 26, with a content of a wax.

28. Adhesive composition according to claim 27, with a content of petroleum wax, candelella wax or beeswax.

29. Adhesive composition according to one of claims 22 to 28, containing the following components (in parts per weight):
| **Component** | **Range** |
|---|---|
| Starch | 5-50 |
| Alkali metal base | 0.1-10.0 |
| Borax | 0.1-5.0 |
| Polyvinyl alcohol | 0-5.0 |
| Aldehyde resin | 0.1-5.0 |
| Wax | 0-5.0 |

30. Adhesive composition according to claim 29, containing the following components (in parts per weight):
| **Component** | **Range** |
|---|---|
| Starch | 10-50 |
| Alkali metal base | 0.2-5.0 |
| Borax | 0.2-4.0 |
| Polyvinyl alcohol | 0.1-4.0 |
| Aldehyde resin | 0.1-4.0 |
| Wax | 0.1-4.0 |

31. Adhesive composition according to claim 29, containing the following components (in parts per weight):
| **Component** | **Range** |
|---|---|
| Starch | 12-50 |
| Alkali metal base | 0-5-3.0 |
| Borax | 0.3-3.0 |
| Polyvinyl alcohol | 0.2-3.0 |
| Aldehyde resin | 0.2-3.0 |
| Wax | 0.2-3.0 |

## Revendications

1. Procédé visant à la réduction de la teneur en aldéhyde libre de colles pour produits en papier résistants à l'eau, contenant une résine aldéhydique soluble, laquelle résine a été obtenue en faisant réagir un aldéhyde avec au moins un premier monomère apte à copolymériser avec au moins un proton acide, en absence de glyoxal, en faisant réagir l'aldéhyde libre qui ne s'est pas lié au premier monomère avec au moins un second monomère contenant un proton acide,
caractérisé en ce que le second monomère consiste en de l'urée ou de l'urée substituée contenant au moins un proton réactif en présence de, ou ayant déjà réagi avec, une base azotée avec au moins un groupe NH et en présence d'un catalyseur acide, ou en ce que le second monomère comporte le proton acide au niveau d'un atome de carbone voisin d'un groupe carbonyle ou sous forme d'un groupe hydroxyle phénolique.

2. Procédé selon la revendication 1, caractérisé en ce que l'aldéhyde formaldéhyde se présente sous la forme de HCHO en phase gazeuse ou dissous dans l'eau ou sous la forme de trioxyméthylène, hexaméthylénetétramine ou paraformaldéhyde.

3. Procédé selon la revendication 1 ou 2, caractérisé en ce que le premier monomère consiste en :
a) acétone, méthyl éthyl cétone, phényl éthyl cétone, diphényl cétone ou cyclohexanone ;
b) phénol non substitué, méthyl phénol, aminophénol ;
c) résorcine ou résorcine substituée, ou
d) urée ou urée substituée par l'azote.

4. Procédé selon l'une des revendications 1 à 3, caractérisé en ce que le second monomère est de l'urée en présence d'une base azotée de formule générale 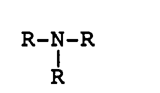 et d'un catalyseur acide, chaque radical R dans la formule pouvant consister indépendamment en de l'eau, un alkyle, un hydroxyalkyle, un aryle, un alkaryle ou un aralkyle, un radical R au moins consistant toutefois en de l'eau.

5. Procédé selon la revendication 4, caractérisé en ce que la base azotée est de l'ammoniac, de la méthylamine, -de l'éthylamine, de la propylamine, de l'e-butylamine, de l'hydroxyéthylamine, de l'éthylène diamine, de la cyclohexylamine, de la diméthylamine, de la diéthanolamine, de l'hydroxyéthylpropylamine, de la morpholine ou de la dicyclohexylamine.

6. Procédé selon la revendication 4 ou 5, caractérisé en ce que le catalyseur acide a un pKa supérieur ou égal à 2.

7. Procédé selon la revendication 6, caractérisé en ce que le catalyseur acide comporte un acide d'acidité moyenne et/ou un sel d'un tel acide.

8. Procédé selon la revendication 7, caractérisé en ce que le catalyseur acide comporte de l'acide acétique, de l'acide oxalique, de l'acide citrique, de l'acide phosphorique ou de l'acide carbonique.

9. Procédé selon l'une des revendications 4 à 8, caractérisé en ce que l'on fait réagir la base azotée avec de l'urée non substituée.

10. Procédé selon l'une des revendications 4 à 8, caractérisé en ce que l'on introduit (% rapporté au premier mélange réactionnel,
a) 0,01 à 15,0 % en poids de la base azotée,
b) 0,1 à 10 % en poids d'urée et
c) 0,01 à 5,0 en poids du catalyseur acide.

11. Procédé selon la revendication 10, caractérisé en ce que l'on introduit :
a) 0,1 à 10 % en poids de la base azotée,
b) 0,25 à 8 % en poids d'urée et
c) 0,05 à 2 % en poids du catalyseur acide.

12. Procédé selon la revendication 11, caractérisé en ce que l'on introduit :
a) 0,5 à 8 % en poids de la base azotée
b) 0,5 à 5 % en poids d'urée et
c) 0,1 à 0,5 % en poids du catalyseur acide.

13. Procédé selon l'une des revendications 1 à 3, caractérisé en ce que le second monomère est de l'acétone, du phénol non substitué ou de la résorcine.

14. Procédé selon la revendication 13, caractérisé en ce que l'on utilise au moins deux seconds monomères différents, simultanément ou successivement.

15. Procédé selon la revendication 13 ou 14, caractérisé en ce que le ou les seconds monomères sont ajoutés à raison de 0,1 à 50,0 % en poids rapporté au produit de réaction de l'aldéhyde avec le premier monomère.

16. Procédé selon la revendication 15, caractérisé en ce que le ou les seconds monomères sont ajoutés à raison de 1,0 à 20,0 % en poids.

17. Procédé selon l'une des revendications 13 à 16, caractérisé en ce que le produit de réaction de l'aldéhyde avec le premier monomère est modifié à l'aide d'urée ou de mélamine avant d'être soumis à réaction avec le second monomère.

18. Procédé selon la revendication 17, caractérisé en ce que la modification est effectuée à raison de 1,0 à 10,0 % en poids d'urée, rapporté au produit réactionnel.

19. Procédé selon la revendication 18, caractérisé en ce que la modification est effectuée à raison d'environ 5,0 % en poids d'urée.

20. Procédé selon l'une des revendications précédentes, caractérisé en ce que les réactions se déroulent en phase aqueuse à pH compris entre 4 et 10.

21. Procédé selon la revendication 20, caractérisé en ce que les réactions se déroulent en milieu alcalin jusqu'à pH 10.

22. Composition adhésive pour la fabrication de produits en papier résistants à l'eau, tels que le carton ondulé et similaires, contenant de l'amidon, une résine aldéhyde et éventuellement des additifs en solution aqueuse basique ou en suspension,
caractérisée par une teneur en aldéhyde libre inférieure à 3% et susceptible d'être obtenue selon les revendications 1 à 21.

23. Composition adhésive selon la revendication 22, caractérisée en ce qu'elle comprend également un composant à base d'acide borique.

24. Composition adhésive selon la revendication 23, caractérisée en ce qu'elle comprend de l'acide orthoborique et/ou du borax.

25. Composition adhésive selon l'une des revendications 22 à 24, caractérisée en ce qu'elle comprend également un composant à base d'alcool polyvinylique.

26. Composition adhésive selon la revendication 25, caractérisée en ce qu'elle comprend un homopolymère ou un interpolymère d'acétate de vinyle totalement ou partiellement hydrolysé, dans lequel moins de 91 % des groupes hydroxyle ne sont pas estérifiés.

27. Composition adhésive selon l'une des revendications 22 à 26, caractérisée en ce qu'elle comporte une cire.

28. Composition adhésive selon la revendication 27, caractérisée en ce qu'elle comporte de la cire de pétrole brut, de la cire de candelilla ou de la cire d'abeille.

29. Composition adhésive selon l'une des revendications 22 à 28, caractérisée en ce qu'elle comporte les composants suivants (en pourcentage pondéral) :
| **Composant** | **Plage de pourcentages** |
|---|---|
| Amidon | 5 à 50 |
| Base de métal alcalin | 0,1 à 10,0 |
| Borax | 0,1 à 5,0 |
| Alcool polyvinylique | 0 à 5,0 |
| Résine aldéhydique | 0,1 à 5,0 |
| Cire | 0 à 5,0 |

30. Composition adhésive selon la revendication 29, caractérisée en ce qu'elle comporte les composants suivants (en pourcentage pondéral) :
| **Composant** | **Plage de pourcentages** |
|---|---|
| Amidon | 10 à 50 |
| Base de métal alcalin | 0,2 à 5,0 |
| Borax | 0,2 à 4,0 |
| Alcool polyvinylique | 0,1 à 4,0 |
| Résine aldéhydique | 0,1 à 4,0 |
| Cire | 0,1 à 4,0 |

31. Composition adhésive selon la revendication 29, caractérisée en ce qu'elle comporte les composants suivants (en pourcentage pondéral) :
| **Composant** | **Plage de pourcentages** |
|---|---|
| Amidon | 12 à 50 |
| Base de métal alcalin | 0,5 à 3,0 |
| Borax | 0,3 à 3,0 |
| Alcool polyvinylique | 0,2 à 3,0 |
| Résine aldéhydique | 0,2 à 3,0 |
| Cire | 0,2 à 3,0 |
